(19) Europäisches Patentamt
European Patent Office
Office européen des brevets

(11) EP 1 125 968 B1

# (12) EUROPÄISCHE PATENTSCHRIFT

(45) Veröffentlichungstag und Bekanntmachung des Hinweises auf die Patenterteilung:
**29.03.2006 Patentblatt 2006/13**

(51) Int Cl.:
*C08J 5/18* (2006.01) *B32B 27/36* (2006.01)

(21) Anmeldenummer: **01102793.5**

(22) Anmeldetag: **09.02.2001**

(54) **Weiss-opake, UV-stabilisierte Folie mit niedriger Transparanz aus einem kristallisierbaren Thermoplasten**

White opaque UV-stabilized film with low transparency, made from a crystallizable thermoplastic polymer

Feuille blanche opaque, stabilisée aux UV, qui présente une transparence faible, à base d'un thermoplastique crystallisable

(84) Benannte Vertragsstaaten:
**DE GB IT LU**

(30) Priorität: **19.02.2000 DE 10007673**

(43) Veröffentlichungstag der Anmeldung:
**22.08.2001 Patentblatt 2001/34**

(73) Patentinhaber: **Mitsubishi Polyester Film GmbH**
**65203 Wiesbaden (DE)**

(72) Erfinder:
- **Murschall, Ursula, Dr.**
  **55283 Nierstein (DE)**
- **Crass, Günther**
  **65232 Taunusstein (DE)**
- **Oberländer, Klaus**
  **65207 Wiesbaden (DE)**
- **Kern, Ulrich, Dr.**
  **55218 Ingelheim (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 857 749** **US-A- 4 780 402**
**US-A- 4 921 670** **US-A- 5 660 931**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine weiß-opake, UV-stabilisierte Folie mit niedriger Transparenz aus einem kristallisierbaren Thermoplasten, deren Dicke im Bereich von 10 bis 500 μm liegt. Die Folie enthält mindestens Bariumsulfat, mindestens einen optischen Aufheller sowie einen UV-Stabilisator als Lichtschutzmittel und zeichnet sich durch eine gute Verstreckbarkeit, durch eine niedrige Transparenz sowie sehr gute optische und mechanische Eigenschaften aus. Die Erfindung betrifft femer ein Verfahren zur Herstellung dieser Folie und ihre Verwendung.

Opake Folien mit einer Dicke zwischen 10 und 500 μm sind hinreichend bekannt. Alle bekannten Folien enthalten weder UV-Stabilisatoren als Lichtschutzmittel noch optische Aufheller, so daß sich weder die Folien noch daraus gefertigte Artikel für Außenanwendungen eignen. Bei Außenanwendungen zeigen diese Folien bereits nach kurzer Zeit eine Vergilbung und eine Verschlechterung der mechanischen Eigenschaften infolge eines photooxidativen Abbaus des Thermoplasten durch Sonnenlicht.

In der **EP-A-0 620 245** sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

Aufgabe der vorliegenden Erfindung war es, eine weiß-opake Folie mit einer Dicke von 10 bis 500 μm bereitzustellen, die neben einer guten Verstreckbarkeit, guten mechanischen sowie optischen Eigenschaften, einer niedrigen Gelbzahl vor allem eine hohe UV-Stabilität aufweist und einen hohen Lichtschutz bietet.

Eine hohe UV-Stabilität bedeutet, daß die Folien durch Sonnenlicht oder andere UV-Strahlung nicht oder nur extrem wenig geschädigt werden, so daß sich die Folien für Außenanwendungen und/oder kritische Innenanwendungen eignen. Insbesondere sollen die Folien bei mehrjähriger Außenanwendung nichtvergilben, keine Versprödung oder Rißbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Zu den guten optischen Eigenschaften zählen beispielsweise eine homogene, streifenfreie Einfärbung über die gesamte Folienlänge und Folienbreite, eine niedrige Lichttransmission/Transparenz (≤ 40%), ein akzeptabler Oberflächenglanz (≥ 10), sowie eine niedrige Gelbzahl (dickenabhängig, ≤ 45 bei 250 μm-Folien und ≤ 20 bei 50 μm Folien).

Zu den guten mechanischen Eigenschaften zählt unter anderem ein hoher E-Modul ($E_{MD}$ ≥ 3300 N/mm$^2$; $E_{TD}$ ≥ 4200 N/mm$^2$) sowie gute Reißfestigkeitswerte (in MD ≥ 120 N/mm$^2$; in TD ≥ 170 N/mm$^2$) und gute Reißdehnungswerte in Längs- und in Querrichtung (in MD ≥ 120 %; in TD ≥ 50 %).

Zu der guten Verstreckbarkeit zählt, daß sich die Folie bei ihrer Herstellung sowohl in Längs- als auch in Querrichtung hervorragend und ohne Abrisse orientieren läßt.

Darüber hinaus sollte die erfindungsgemäße Folie rezyklierbar sein, d.h. daß während der Folienherstellung im laufenden Betrieb anfallendes Verschnittmaterial wieder als Regenerat in den Produktionsbetrieb zurückgeschleust werden kann, insbesondere ohne Verlust der optischen und der mechanischen Eigenschaften der Folie, damit sie beispielsweise auch für Innenanwendungen und im Messebau eingesetzt werden kann.

Gelöst wird diese Aufgabe durch eine weiß-opake Folie mit einer Dicke im Bereich von 10 bis 500 μm, die als Hauptbestandteil einen kristallisierbaren Thermoplasten enthält, und deren Kennzeichenmerkmale im einzelnen in Patentanspruch 1 aufgezählt sind.

Die Folie gemäß der Erfindung enthält als Hauptbestandteil einen kristallisierbaren Thermoplasten. Geeignete kristallisierbare bzw. teilkristalline Thermoplaste sind beispielsweise Polyethylenterephthalat, Polybutylenterephthalat, Polyethylennaphthalat, wobei Polyethylenterephthalat bevorzugt ist.

Erfindungsgemäß versteht man unter kristallisierbarem Thermoplasten

- kristallisierbare Homopolymere;
- kristallisierbare Copolymere; kristallisierbare Compounds;
- kristallisierbares Rezyklat und
- andere Variationen von kristallisierbaren Thermoplasten.

Die Folie gemäß der Erfindung kann sowohl einschichtig als auch mehrschichtig sein, und sie kann mit diversen Copolyestern oder Haftvermitttern beschichtet sein.

Die Folie gemäß der Erfindung enthält mindestens einen UV-Stabilisator als Lichtschutzmittel, der zweckmäßigerweise über die sogenannte Masterbatch-Technologie direkt bei der Folienherstellung zudosiert wird, wobei die Menge an UV-Stabilisator vorzugsweise zwischen 0,01 und 5 Gew.%, bezogen auf das Gewicht des kristallisierbaren Thermoplasten, liegt.

Die Folie gemäß der Erfindung enthält mindestens Bariumsulfat als Pigment, wobei die Menge an Pigment vorzugsweise im Bereich zwischen 0,2 und 40 Gew.-%, bezogen auf das Gewicht des kristallisierbaren Thermoplasten, liegt. Vorzugsweise wird das Bariumsulfat über die sogenannte Masterbatch-Technologie bei der Folienherstellung dem

Thermoplasten zudosiert.

Die Folie enthält mindestens einen optischen Aufheller, wobei der optische Aufheller in Mengen im Bereich von 10 bis 50.000 ppm, insbesondere von 20 bis 30.000 ppm, besonders bevorzugt von 50 bis 25.000 ppm, bezogen auf das Gewicht des kristallisierbaren Thermoplasten, eingesetzt wird. Vorzugsweise wird auch der optische Aufheller über die sogenannte Masterbatch-Technologie bei der Folienherstellung dem Thermoplasten zudosiert.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in alpha-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für weiß-opake Folien ungeeignet, da sie zur Verfärbung oder Farbänderung führen. Für weiß-opake Folien sind nur organische und metallorganische Verbindungen geeignet, die dem zu stabilisierenden Thermoplasten keine oder nur eine extrem geringe Farbe oder Farbänderung verleihen. Geeignete UV-Stabilisatoren als Lichtschutzmittel sind UV-Stabilisatoren, die mindestens 70 %, vorzugsweise mindestens 80 %, besonders bevorzugt mindestens 90 %, des UV-Lichts im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d.h. sich nicht in Spaltprodukte zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

Als weiteres Additiv enthält die erfindungsgemäße Folie einen optischen Aufheller. Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben.

Erfindungsgemäß geeignete optische Aufheller sind Bis-benzoxazole, Phenylcumarine und Bis-sterylbiphenyle, insbesondere Phenylcumarine, besonders bevorzugt sind Triazin-phenylcumarine, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig, können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere Sudanblau 2 (BASF, Ludwigshafen, Bundesrepublik Deutschland) erwiesen.

Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Es war völlig überraschend, daß der Einsatz der oben genannten Additivkombination aus Bariumsulfat, UV-Stabilisator, optischem Aufheller und gegebenenfalls blauen Farbstoffen in den Folien zu dem gewünschten Ergebnis führte. Der Fachmann hätte vermutlich zunächst versucht, eine gewisse UV-Stabilität über ein Antioxidanz zu erreichen, hätte jedoch nach Bewitterung festgestellt, daß die Folie schnell gelb wird.

Vor dem Hintergrund, daß UV-Stabilisatoren, die das UV-Licht absorbieren und somit Schutz bieten, hätte der Fachmann wohl handelsübliche UV-Stabilisatoren eingesetzt. Dabei hätte er festgestellt, daß

- der UV-Stabilisator eine mangelnde thermische Stabilität hat und sich bei Temperaturen zwischen 200 und 240 °C zersetzt oder ausgast
- er große Mengen (ca.10 bis 15 Gew.-%) UV-Stabilisator einarbeiten muß, damit das UV-Licht ausreichend absorbiert wird und damit die Folie nicht geschädigt wird.

Bei diesen hohen Konzentrationen hätte er festgestellt, daß die Folie schon nach der Herstellung gelb ist, bei Gelbzahlunterschieden (YID) um die 25. Des weiteren hätte er festgestellt, daß die mechanischen Eigenschaften negativ beeinflußt werden. Beim Verstrecken der Folie hätte er ungewöhnliche Probleme bekommen wie

- Abrisse wegen mangelnder Festigkeit, d.h. E-Modul
- Düsenablagerungen, was zu Profilschwankungen führt
- Walzenablagerungen vom UV-Stabilisator, was zur Beeinträchtigung der optischen Eigenschaften (schlechte Trübung, Klebedefekt, inhomogene Oberfläche) führt
- Ablagerungen in Streck- und Fixierrahmen, die auf die Folie tropfen.

Daher war es mehr als überraschend, daß bereits mit niedrigen Konzentrationen der erfindungsgemäßen Kombination ein hervorragender UV-Schutz erzielt wurde. Sehr überraschend war, daß sich bei diesem hervorragenden UV-Schutz aufgrund der synergistischen Wirkung der Additive

- der Gelbwert der Folie im Vergleich zu einer nicht-stabilisierten Folie nicht erhöht, sondem emiedrigt, d.h. die Folie ist weißer,
- keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so daß sie verfahrenssicher und stabil auf »high speed film lines« bis zu Geschwindigkeiten von 420 m/min produktionssicher hergestellt werden kann.

Damit ist die erfindungsgemäße weiß-opake Folie auch wirtschaftlich rentabel.

Des weiteren ist sehr überraschend, daß auch das Folienverschnittmaterial als Regenerat wieder für die Folienproduktion einsetzbar ist, ohne den Gelbwert der Folie negativ zu beeinflussen.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden.

Die Menge an Bariumsulfat beträgt zweckmäßigerweise 0,2 bis 40 Gew.-%, vorzugsweise 0,5 bis 30 Gew.%, besonders bevorzugt 1 bis 25 Gew.%, bezogen auf das Gewicht des Thermoplasten.

Die mittlere Teilchengröße des Bariumsulfats ist relativ klein und liegt vorzugsweise im Bereich von 0,1 bis 5 $\mu$m, besonders bevorzugt im Bereich von 0,2 bis 3 $\mu$m (Sedigraphmethode). Die Dichte des verwendeten Bariumsulfates liegt zwischen 4 und 5 g/$cm^3$.

In einer besonders bevorzugten Ausführungsform enthält die erfindungsgemäße Folie als Hauptbestandteil ein kristallisierbares Polyethylenterephthalat sowie 1 bis 25 Gew.-% gefälltes Bariumsulfat, zweckmäßigerweise mit einem Teilchendurchmesser von 0,4 bis 1 $\mu$m, wobei ®Blanc fixe XR-HX oder Blanc fixe HXH von der Firma Sachtleben Chemie besonders bevorzugt wird.

Des weiteren enthält die erfindungsgemäße Folie vorzugsweise 10 bis 50.000 ppm eines optischen Aufhellers, der in dem kristallisierbaren Thermoplasten löslich ist, wobei Triazin-phenylcumarin, das unter der Produktbezeichnung Tinopal (Ciba-Geigy, Basel, Schweiz) erhältlich ist, oder Hostalux KS (Clariant GmbH) sowie Eastobrite OB-1 (Eastman) besonders bevorzugt sind.

Femer enthält die erfindungsgemäße Folie in ihrer besonders bevorzugten Ausführungsform 0,01 bis 5,0 Gew.-% 2-(4,6-Diphenyl-1,3,5-triazin-2-yl)-5-(hexyl)oxyphenol der Formel:

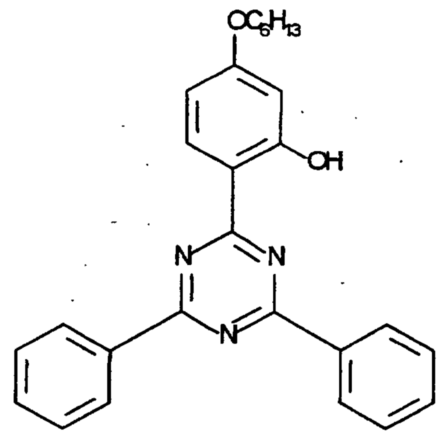

oder 0,1 bis 5,0 Gew.% 2,2'-Methylen-bis(6-(2H-benzotriazol-2-yl)-4-(1,1,2,2-tetramethylpropyl)-phenol der Formel:

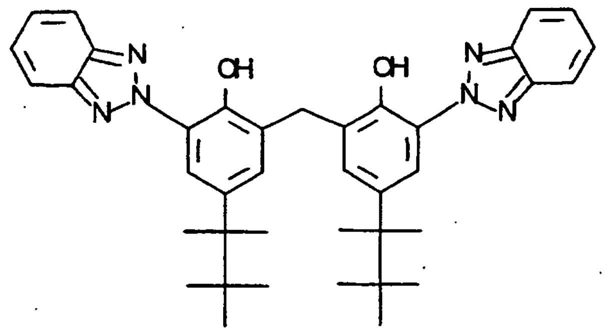

jeweils bezogen auf das Gewicht des Thermoplasten.

In einer weiteren Ausführungsform können auch Mischungen der genannten UV-Stabilisatoren oder Mischungen von mindestens einem der bevorzugten UV-Stabilisatoren mit anderen UV-Stabilisatoren eingesetzt werden, wobei die Gesamtmenge an Lichtschutzmittel vorzugsweise zwischen 0,01 Gew.-% und 5,0 Gew.-%, bezogen auf das Gewicht des Thermoplasten, liegt.

Der Oberflächenglanz der erfindungsgemäßen weiß-opaken Folie, gemessen nach DIN 67530 (Meßwinkel 20°) ist größer/gleich 10, vorzugsweise größer/gleich 15.

Die Lichttransmission (Transparenz) der erfindungsgemäßen weiß-opaken Folie, gemessen nach ASTM-D 1003, ist kleiner/gleich 30 %, vorzugsweise kleiner/gleich 25 %. Die Einfärbung ist homogen und streifenfrei über die gesamte Lauflänge und Folienbreite.

Durch die synergistische Wirkung der Additive Bariumsulfat, UV-Stabilisator, optischer Aufheller und gegebenenfalls blauem Farbstoff ist die erfindungsgemäße weiß-opake Folie weißer, d.h. weniger gelbstichig, als eine nur mit Bariumsulfat ausgerüstete Folie.

Der E-Modul (ISO 527-1-2) der erfindungsgemäßen weiß-opaken Folie in Längsrichtung liegt bei größer/gleich 3300 $N/mm^2$, vorzugsweise bei größer/gleich 3600 $N/mm^2$. Ihr E-Modul (ISO 527-1-2) in Querrichtung liegt bei größer/gleich 4800 $N/mm^2$, vorzugsweise bei größer/gleich 5100 $N/mm^2$

Die Standardviskosität SV (DCE) des Polyethylenterephthalats, gemessen in Dichloressigsäure nach DIN 53728, liegt im Bereich zwischen 600 und 1100, vorzugsweise zwischen 700 und 1000.

Die intrinsische Viskosität IV (DCE) berechnet sich aus der Standardviskosität SV (DCE) wie folgt:

$$IV\ (DCE) = 6{,}67 \cdot 10^{-4}\ SV\ (DCE) + 0{,}118$$

Die weiß-opake Polyethylenterephtalat-Folie, die mindestens Bariumsulfat, einen optischen Aufheller, einen UV-Stabilisator und gegebenenfalls blauen Farbstoffe enthält, kann sowohl einschichtig als auch mehrschichtig sein.

In der mehrschichtigen Ausführungsform ist die Folie aus mindestens einer Kemschicht und mindestens einer

Deckschicht aufgebaut, wobei insbesondere ein dreischichtiger Aufbau der Art A-B-A oder A-B-C bevorzugt ist.

Für die mehrschichtige Ausführungsform ist es wesentlich, daß das Polyethylenterephthalat der Kemschicht eine ähnliche Standardviskosität besitzt wie das Polyethylenterephthalat der Deckschicht(en), die an die Kemschicht angrenzt(angrenzen).

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. In dieserbesonderen Ausführungsform haben die Thermoplasten der Deckschichten ebenfalls eine ähnliche Standardviskosität wie das Polyethylenterephthalat der Kernschicht.

In der mehrschichtigen Ausführungsform sind das Bariumsulfat sowie der optische Aufheller und gegebenenfalls der blaue Farbstoff vorzugsweise in der Kernschicht enthalten. Bei Bedarf können aber auch die Deckschichten ausgerüstet sein.

In der mehrschichtigen Ausführungsform ist der UV-Stabilisator allerdings vorzugsweise in der bzw. den Deckschichten enthalten. Jedoch kann nach Bedarf auch die Kemschicht mit UV-Stabilisatoren ausgerüstet sein.

Anders als in der einschichtigen Ausführungsform bezieht sich bei der mehrschichtigen Ausführungsform die Mengenangabe der Additive auf das Gewicht derThermoplasten in der mit dem/den Additiven ausgerüsteten Schicht.

Die Folie kann auch mindestens einseitig mit einer kratzfesten Beschichtung, mit einem Copolyester oder mit einem Haftvermittler versehen sein.

Ganz überraschend haben Bewitterungsversuche nach der Testspezifikation ISO 4892 mit dem Atlas Cl65 Weather Om eter gezeigt, daß es im Falle einer dreischichtigen Folie durchaus ausreichend ist, die 0,5 μm bis 2 μm dicken Deckschichten mit UV-Stabilisatoren auszurüsten.

Dadurch werden die mit der bekannten Koextrusionstechnologie hergestellten UV-stabilisierten, mehrschichtigen Folien im Vergleich zu den komplett UV-stabilisierten Monofolien wirtschaftlich interessant, da deutlich weniger UV-Stabilisator zum Erreichen einer vergleichbaren UV-Stabilität benötigt wird.

Bewitterungstests haben ergeben, daß die erfindungsgemäßen UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Bei der Herstellung der Folie wurde festgestellt, daß sich die UV-stabilisierte Folie hervorragend in Längs- und in Querrichtung ohne Abrisse orientieren läßt. Desweiteren wurden keinerlei Ausgasungen des UV-Stabilisators im Produktionsprozess gefunden, was erfindungswesentlich ist, da die meisten UV-Stabilisatoren bei Extrusionstemperaturen über 260 °C störende, unangenehme Ausgasungen zeigen und damit untauglich sind.

Des weiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, Labels oder anderer Werbeartikel eignet.

Die Herstellung der erfindungsgemäßen Folie kann beispielsweise nach einem Extrusionsverfahren in einer Extrusionsstraße erfolgen.

Erfindungsgemäß können das Bariumsulfat, derUV-Stabilisator, der optische Aufheller und gegebenenfalls der blaue Farbstoff direkt beim Thermoplast-Rohstoffhersteller eingearbeitet werden oder bei der Folienherstellung in den Extruder über die Masterbatch-Technologie zudosiert werden. Bevorzugt ist die Zudosierung des Bariumsulfats, des UV-Stabilisators, des optischen Aufhellers und gegebenenfalls des blauen Farbstoffes über die Masterbatch-Technologie. Die Additive werden dabei in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig ist, daß die Komgröße und das Schüttgewicht des/der Masterbatches ähnlich der Komgröße und dem Schüttgewicht des Thermoplasten ist, so daß eine homogene Verteilung und damit eine homogene UV-Stabilisierung und eine homogene Opazität erreicht werden.

Die Polyesterfolien können nach bekannten Verfahren aus einem Polyesterrohstoff mit ggf. weiteren Rohstoffen sowie dem optischen Aufheller, dem UV-Stabilisator, dem Bariumsulfat, gegebenenfalls dem blauen Farbstoff und/oder weiteren üblichen Additiven in üblicher Menge von 0,1 bis maximal 10 Gew.% sowohl als Monofolien als auch als mehrschichtige, ggf. koextrudierte Folien mit gleichen oder unterschiedlich ausgebildeten Oberflächen hergestellt werden, wobei eine Oberfläche beispielsweise pigmentiert und UV-stabil ausgerüstet ist und die andere Oberfläche kein Pigment und/oder UV-Stabilisator enthält. Ebenso können eine oder beide Oberflächen der Folie nach bekannten Verfahren mit einer üblichen funktionalen Beschichtung versehen werden.

Bei dem bevorzugten Extrusionsverfahren zur Herstellung der Polyesterfolie wird das aufgeschmolzene Polyestermaterial durch eine Schlitzdüse extrudiert und als weitgehend amorphe Vorfolie auf einer Kühlwalze abgeschreckt. Diese Folie wird anschließend emeut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen erfindungsgemäß bei $T_g$ + 10 K bis $T_g$ + 60 K (mit $T_g$ = Glastemperatur), das Streckverhältnis der Längsstreckung liegt

erfindungsgemäß im Bereich von 2 bis 6, insbesondere von 2,5 bis 4,5, das der Querstreckung im Bereich von 2 bis 5, insbesondere von 3 bis 4,5, und das der ggf. durchgeführten zweiten Längsstreckung von 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen im Bereich von 200 bis 260 °C, insbesondere von 220 bis 250 °C. Anschließend wird die Folie abgekühlt und aufgewickelt.

Es hat sich völlig unerwartet herausgestellt, daß die Verfahrensparameter der Längsstreckung eine wesentliche Einflussgröße darstellen, von der die optischen Eigenschaften (Transparenz) der Folie abhängen. Zu den Verfahrensparametern der Streckung in Längsrichtung gehören insbesondere das Längsstreckverhältnis und die Längsstrecktemperatur. Völlig überraschend konnte durch Variation des Längsstreckverhältnisses die Transparenz stark beeinflusst werden. Erhält man beispielsweise auf einer Folienanlage eine Folie, deren Transparenzwerte oberhalb der erfindungsgemäßen Werte liegen, so können erfindungsgemäße Folien mit niedrigerer Transparenz hergestellt werden, indem man in der Längsstreckung das Längsstreckverhältnis erhöht. Eine Erhöhung des Längsstreckverhältnisses um relativ 7 % ergab eine Reduzierung der Transparenz um relativ 15 bis 20 %.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für den Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium und in Lebensmittelanwendungen.

Aufgrund der guten UV-Stabilität eignet sich die erfindungsgemäße Folie ebenfalls für Außenanwendungen, wiezB. für Überdachungen, Außenverkleidungen, Abdeckungen, Anwendungen im Bausektor, Lichtwerbeprofile und im Verkehrssektor.

Die Erfindung wird im folgenden anhand von Ausführungsbeispielen näher erläutert.

Die Messung der einzelnen Eigenschaften erfolgt dabei gemäß der folgenden Normen bzw. Verfahren.

**Meßmethoden**

**Oberflächenglanz**

Der Oberflächenglanz wird bei einem Meßwinkel von 20° nach DIN 67530 gemessen.

**Lichttransmission/Transparenz**

Unter der Lichttransmission/Transparenz ist das Verhältnis des insgesamt durchgelassenen Lichtes zur einfallenden Lichtmenge zu verstehen.

Die Lichttransmission wird mit dem Messgerät "Hazegard plus" nach ASTM D 1003 gemessen.

**Oberflächendefekte, homogene Einfärbung**

Die Oberflächendefekte und die homogene Einfärbung werden visuell bestimmt.

**Mechanische Eigenschaften**

Der E-Modul, die Reißfestigkeit und die Reißdehnung werden in Längs- und Querrichtung nach ISO 527-1-2 gemessen.

**SV (DCE), IV (DCE)**

Die Standardviskosität SV (DCE) wird angelehnt an DIN 53726 in Dichloressigsäure gemessen.
Die intrinsische Viskosität (IV) berechnet sich wie folgt aus der Standardviskosität (SV)

$$IV\ (DCE) = 6{,}67 \cdot 10^{-4}\ SV\ (DCE) + 0{,}118$$

**Gelbwert**

Der Gelbwert YID ist die Abweichung von der Farblosigkeit in Richtung "Gelb" und wird gemäß DIN 6167 gemessen.

**Bewitterung (beidseitig), UV-Stabilität**

Die UV-Stabilität wird nach der Testspezifikation ISO 4892 wie folgt geprüft

| | |
|---|---|
| Testgerät | : Atlas Ci 65 Weather Ometer |
| Testbedingungen | : ISO 4892, d. h. künstliche Bewitterung |
| Bestrahlungszeit | : 1000 Stunden (pro Seite) |
| Bestrahlung | : 0,5 W/m$^2$, 340 nm |
| Temperatur | : 63 °C |
| Relative Luftfeuchte | : 50 % |
| Xenonlampe | : innerer und äußerer Filter aus Borosilikat |
| Bestrahlungszyklen | : 102 Minuten UV-Licht, dann 18 Minuten UV-Licht mit Wasserbesprühung der Proben, dann wieder 102 Minuten UV-Licht usw. |

In den nachstehenden Beispielen und Vergleichsbeispielen handelt es sich jeweils um einschichtige weiß-opake Folien, die auf der beschriebenen Extrusionsstraße hergestellt werden.
Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Lichttransmission und des Glanzes geprüft.

**Beispiel 1**

Es wurde eine 50 μm dicke, weiß-opake Folie hergestellt, die als Hauptbestandteil Polyethylenterephthalat (RT49, KoSa, Deutschland) als Klarrohstoff, 18 Gew.-% Bariumsulfat (BlancfixeXR-HX, Sachtleben Chemie) als Pigment, 0,5% UV-Stabilisator (Tinuvin 1577, Ciba-Geigy, Basel) als Lichtschutzmittel, 200 ppm optischen Aufheller (Tinopal, Ciba-Geigy, Basel) und 40 ppm blauen Farbstoff (Sudanblau 2, BASF Ludwigshafen) enthielt.
Die Additive Bariumsulfat, UV-Stabilisator, optischer Aufheller und blauer Farbstoff wurden als Masterbatches zugegeben.
Das Masterbatch (1) setzte sich aus 64 Gew.% Klarrohstoff und 36 Gew.-% Bariumsulfat zusammen. Das Masterbatch (2) bestand zu 20 Gew.-% UV-Stabilisator und zu 80 Gew.-% aus Klarrohstoff. Das Masterbatch (3) enthält neben Klarrohstoff 8000 ppm optischen Aufheller und 2000 ppm blauen Farbstoff.
Vor der Extrusion wurden 50 Gew.% von Masterbatch (1), 2,5 Gew.-% von Masterbatch (2), 2,5 Gew.-% von Masterbatch (3) und 45 Gew.-% Klarrohstoff bei einer Temperatur von 150°C getrocknet und anschließend im Extruder aufgeschmolzen.
Das bei der Folienherstellung eingestellte Längsstreckverhältnis betrugt exakt 3,1.

**Beispiel 2**

Beispiel 1 wurde wiederholt. Das Längsstreckverhältnis wurde aber auf 2,9 reduziert.

**Beispiel 3**

Die Rezepturierung entsprach der des Beispiels 1. Das Längsstreckverhältnis war allerdings auf 3,3 erhöht, während die eingestellten Längstrecktemperaturen unverändert blieben.

**Vergleichsbeispiel 1**

Beispiel 2 wurde wiederholt. Jedoch wurde der Folie kein Masterbatch (3) zugegeben.

**Vergleichsbeispiel 2**

Vergleichsbeispiel 1 wurde wiederholt. Jedoch wurde der Folie auch kein Masterbatch (2) zugegeben, d.h. die Folie enthielt als Additiv lediglich Bariumsulfat als Pigment.
Die nach den Beispielen 1 bis 3 hergestellten weiß-opaken PET-Folien und die Folien nach den Vergleichsbeispielen 1 und 2 hatten das in der nachfolgenden Tabelle illustrierte Eigenschaftsprofil:

**Tabelle**

| Eigenschaften | Bsp. 1 | Bsp. 2 | Bsp. 3 | Vgl.-Bsp. 1 | Vgl.-Bsp. 2 |
|---|---|---|---|---|---|
| Dicke [µm] | 50 | 50 | 50 | 50 | 50 |
| Oberflächenglanz 1. Seite | 20 | 19 | 20 | 20 | 19 |
| (Meßwinkel 20°) 2. Seite | 21 | 20 | 21 | 21 | 20 |
| Lichttransmission/Transparenz [%] | 19,3 | 22,7 | 16,4 | 22,8 | 22,6 |
| Gelbzahl (YID) | 18 | 18 | 18 | 24 | 25 |
| E-Modul längs [N/mm²] | 3600 | 3650 | 3600 | 3550 | 3650 |
| E-Modul quer [N/mm²] | 5200 | 5200 | 5150 | 5100 | 5200 |
| Reißfestigkeit längs [N/mm²] | 150 | 155 | 155 | 160 | 150 |
| Reißfestigkeit quer [N/mm²] | 240 | 240 | 230 | 230 | 240 |
| Reißdehnung längs [%] | 180 | 190 | 185 | 185 | 185 |
| Reißdehnung quer [%] | 65 | 65 | 60 | 65 | 65 |
| Einfärbung | strahlend weiß | strahlend weiß | strahlend weiß | gelb-stichig | gelb-stichig |

**Ergebnisse des Bewitterungstests**

Nach 1000 Stunden Bewitterung pro Seite mit dem Atlas CI 65 Weather Ometer unterschieden sich die Folien der Beispiele 1 bis 3 sowie des Vergleichbeispiels 1 optisch kaum von nicht bewitterten Folien. Die mechanischen Eigenschaften waren im Vergleich zu unbewitterten Folien nahezu unverändert. Nach 1000 Stunden Bewitterung pro Seite mit dem Atlas CI 65 Weather Ometer wies die Folie aus Vergleichsbeispiel 2 an den Oberflächen Risse und Versprödungserscheinungen auf. Ein präzises Eigenschaftsprofil konnte daher nicht mehr gemessen werden. Außerdem zeigte die Folie eine visuell sichtbare höhere Gelbfärbung.

**Patentansprüche**

1. Weiß-opake Folie mit einer Dicke im Bereich von 10 bis 500 µm, die als Hauptbestandteil einen kristallisierbaren Thermoplasten enthält, **dadurch gekennzeichnet, daß** die Folie mindestens Bariumsulfat als Pigment, mindestens einen UV-Stabilisator als Lichtschutzmittel und mindestens einen optischen Aufheller enthält, wobei sie den UV-Stabilisator in einer Menge im Bereich von 0,01 bis 5 Gew.-%, bezogen auf das Gewicht des Thermoplasten, enthält, und wobei der UV-Stabilisator ausgewählt ist aus der Gruppe enthaltend 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine und Mischungen von diesen.

2. Weiß-opake Folie nach Anspruch 1, **dadurch gekennzeichnet, daß** der kristallisierbare Thermoplast ausgewählt ist aus der Gruppe enthaltend Polyethylenterephthalat, Polybutylenterephthalat und Polyethylennaphthalat.

3. Weiß-opake Folie nach Anspruch 1 oder 2, **dadurch gekennzeichnet, daß** sie Bariumsulfat als Pigment in einer Menge im Bereich von 0,2 bis 40 Gew.-%, bezogen auf das Gewicht des kristallisierbaren Thermoplasten, enthält und daß das Bariumsulfat dem Thermoplasten über die Masterbatch-Technologie bei der Folienherstellung zudosiert wird.

4. Weiß-opake Folie nach einem der Ansprüche 1 bis 3, **dadurch gekennzeichnet, daß** sie den optischen Aufheller

in Mengen im Bereich von 10 bis 50.000 ppm, bezogen auf das Gewicht des kristallisierbaren Thermoplasten, enthält und daß der optische Aufheller dem Thermoplasten über die Masterbatch-Technologie bei der Folienherstellung zudosiert wird.

**5.** Weiß-opake Folie nach Anspruch 4, **dadurch gekennzeichnet, daß** der optische Aufheller ausgewählt ist aus der Gruppe enthaltend Bis-benzoxazole, Phenylcumarine und Bis-sterylbiphenyle, insbesondere Triazin-phenylcumarin.

**6.** Weiß-opake Folie nach einem der Ansprüche 1 bis 5, **dadurch gekennzeichnet, daß** sie einen UV-Stabilisator als Lichtschutzmittel in einer Menge im Bereich von 0,01 bis 5 Gew.-%, bezogen auf das Gewicht des Thermoplasten, enthält, wobei 2-Hydroxybenzotriazole und Triazine bevorzugt sind, und daß der UV-Stabilisator dem Thermoplasten über die Masterbatch-Technologie bei der Folienherstellung zudosiert wird.

**7.** Weiß-opake Folie nach einem der Ansprüche 1 bis 6, **dadurch gekennzeichnet, daß** sie zusätzlich einen in Polyester löslichen blauen Farbstoff enthält ausgewählt aus der Gruppe enthaltend Kobaltblau, Ultramarinblau, Anthrachinonfarbstoffe und Mischungen von diesen, insbesondere Sudanblau 2, und daß die Menge an blauem Farbstoff im Bereich von 10 bis 10.000 ppm, bezogen auf das Gewicht des kristallisierbaren Thermoplasten, liegt.

**8.** Weiß-opake Folie nach einem der Ansprüche 1 bis 7, **dadurch gekennzeichnet, daß** sie Bariumsulfat als gefälltes Bariumsulfat in Form von feinteiligem farblosen Pulver, mit einer mittleren Komgröße im Bereich von 0,1 bis 5 μm, gemessen nach der Sedigraphmethode, enthält.

**9.** Weiß-Opake Folie nach einem der Ansprüche 1 bis 8, **dadurch gekennzeichnet, daß** sie einen Oberflächenglanz, gemessen nach DIN 67530 (Meßwinkel 20°) von größer/gleich 10, und eine Lichttransmission (Transparenz), gemessen nach ASTM-D 1003, von kleiner/gleich 30 %, besitzt.

**10.** Weiß-opake Folie nach einem der Ansprüche 1 bis 9, **dadurch gekennzeichnet, daß** sie einschichtig oder mehrschichtig ist, wobei sie in der mehrschichtigen Ausführungsform mindestens eine Kemschicht und mindestens eine Deckschicht umfasst, und wobei ein dreischichtiger A-B-A oder A-B-C Aufbau bevorzugt ist.

**11.** Weiß-opake Folie nach Anspruch 10, **dadurch gekennzeichnet, daß** in der mehrschichtigen Ausführungsform das Bariumsulfat, der UV-Stabilisator, der optische Aufheller und gegebenenfalls der blaue Farbstoff in der Kemschicht enthalten sind.

**12.** Weiß-opake Folie nach Anspruch 10, **dadurch gekennzeichnet, daß** auch die Deckschichten mit Bariumsulfat, UV-Stabitisator, optischem Aufheller und gegebenenfalls blauem Farbstoff ausgerüstet sind.

**13.** Weiß-opake Folie nach einem der Ansprüche 1 bis 12, **dadurch gekennzeichnet, daß** sie mindestens einseitig mit einer kratzfesten Beschichtung, mit einem Copolyester oder mit einem Haftvermittler versehen ist.

**14.** Verfahren zum Herstellen einer weiß-opaken Folie nach einem der Ansprüche 1 bis 13, nach dem Extrusionsverfahren, bei dem das in einem Extruder aufgeschmolzene Thermoplastmaterial verdichtet, durch eine Schlitzdüse extrudiert und als weitgehend amorphe Vorfolie auf einer Kühlwalze abgeschreckt, danach erneut erhitzt und in Längs- und Querrichtung bzw. in Quer- und in Längsrichtung bzw. in Längs-, in Quer- und nochmals in Längsrichtung und/oder Querrichtung gestreckt wird, **dadurch gekennzeichnet, daß** die Strecktemperaturen in einem Bereich von $T_g$ + 10 K bis $T_g$ + 60 K eingestellt werden und daß das Streckverhältnis der Längsstreckung im Bereich von 2 bis 5, das der Querstreckung im Bereich von 2 bis 5, und das der ggf. durchgeführten zweiten Längsstreckung von 1,1 bis 3 eingestellt wird.

**15.** Verfahren nach Anspruch 14, **dadurch gekennzeichnet, daß** die Thermofixierung der Folie bei Ofentemperaturen im Bereich von 200 bis 260 °C, durchgeführt wird.

**16.** Verfahren nach Anspruch 14 oder 15, **dadurch gekennzeichnet, daß** die optischen Eigenschaften (Transparenz) der Folie durch Variation der Längsstrecktemperatur und/oder des Längsstreckverhältnisses eingestellt werden.

**17.** Verwendung einer Folie nach einem der Ansprüche 1 bis 13 für Innenraumverkleidungen, für den Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium und in Lebensmittelanwendungen.

18. Verwendung einer weiß-opaken Folie nach einem der Ansprüche 1 bis 13 für Außenanwendungen, wie Überdachungen, Außenverkleidungen, Abdeckungen, Anwendungen im Bausektor, Lichtwerbeprofile und im Verkehrssektor.

## Claims

1. An opaque white film with a thickness of from 10 to 500 μm whose principal constituent is a crystallizable thermoplastic, and which comprises at least barium sulfate as pigment, at least one UV stabilizer as light stabilizer and at least one optical brightener, where the amount of the UV stabilizer present in the film is from 0.01 to 5 % by weight, based on the weight of the thermoplastic, and where the UV stabilizer has been selected from the group consisting of 2-hydroxybenzotriazoles, organo-nickel compounds, salicylic esters, cinnamic ester derivatives, resorcinol monobenzoates, oxanilides, hydroxybenzoic esters, sterically hindered amines, triazines, and mixtures of these.

2. The opaque white film as claimed in claim 1, wherein the crystallizable thermoplastic has been selected from the group consisting of polyethylene terephthalate, polybutylene terephthalate and polyethylene naphthalate.

3. The opaque white film as claimed in claim 1 or 2, which comprises from 0.2 to 40% by weight of barium sulfate as pigment, based on the weight of the crystallizable thermoplastic, wherein the barium sulfate is fed to the thermoplastic by way of masterbatch technology during film production.

4. The opaque white film as claimed in any one of claims 1 to 3, which comprises from 10 to 50,000 ppm, of optical brightener, based on the weight of the crystallizable thermoplastic, wherein the optical brightener is fed to the thermoplastic by way of masterbatch technology during film production.

5. The opaque white film as claimed in claim 4, wherein the optical brightener has been selected from the group consisting of bisbenzoxazoles, phenylcoumarins and bisstearylbiphenyls, in particular triazine phenylcoumarin.

6. The opaque white film as claimed in any one of claims 1 to 5, which comprises from 0.01 to 5% by weight, based on the weight of the thermoplastic, of UV stabilizer as light stabilizer, preference being given here to 2-hydroxybenzotriazoles and triazines, wherein the UV stabilizer is fed to the thermoplastic by way of masterbatch Technology during film production.

7. The opaque white film as claimed in any one of claims 1 to 6, which also comprises a polyester-soluble blue dye selected from the group consisting of cobalt blue, ultramarine blue, anthraquinone dyes and mixtures of these, in particular Sudan Blue 2, wherein the amount of blue dye is from 10 to 10,000 ppm, based on the weight of the crystallizable thermoplastic.

8. The opaque white film as claimed in any one of claims 1 to 7, which comprises barium sulphate in the form of precipitated barium sulfate as fine-particle colorless powder with average grain size of from 0.1 to 5 μm, measured by the Sedigraph method.

9. The opaque white film as claimed in any one of claims 1 to 8, whose surface gloss measured to DIN 67530 (measurement angle 20°) is greater than or equal to 10, and whose luminous transmittance (transparency), measured to ASTM-D 1003 is less than or equal to 30%.

10. The opaque white film as claimed in any one of claims 1 to 9, which is a single- or multilayer film, where the multilayer embodiment comprises at least one core layer and at least one outer layer, and preference is given to a three-layer A-B-A or A-B-C structure.

11. The opaque white film as claimed in claim 10, wherein, in the multilayer embodiment, the barium sulfate, the UV stabilizer, the optical brightener and, if present, the blue dye are present in the core layer.

12. The opaque white film as claimed in claim 10, wherein the outer layers, too, have been provided with barium sulfate, UV stabilizer, optical brightener and, if desired, blue dye.

13. The opaque white film as claimed in any one of claims 1 to 12, wherein a scratch-resistant coating, a copolyester or an adhesion promoter has been provided on at least one side of the film.

14. A process for producing the opaque white film as claimed in any one of claims 1 to 13 by extrusion, in which the thermoplastic material melted in an extruder is compacted, extruded through a slot die and quenched on a chill roll in the form of a substantially amorphous prefilm, and is then reheated and stretched longitudinally and transversely, or transversely and longitudinally, or longitudinally, transversely and again longitudinally and/or transversely, which comprises establishing the stretching temperatures at from $T_g$ + 10 K to $T_g$ + 60 K and establishing a longitudinal stretching ratio of from 2 to 5, and a transverse stretching ratio of from 2 to 5, and establishing a ratio of from 1.1 to 3 for the second longitudinal stretching which may, if desired, be carried out.

15. The process as claimed in claim 14, wherein the heat-setting of the film is carried out at oven temperatures of from 200 to 260°C.

16. The process as claimed in claim 14 or 15, wherein the optical properties (transparency) of the film are established by varying the longitudinal stretching temperature and/or the longitudinal stretching ratio.

17. The use of a film as claimed in any one of claims 1 to 13 for interior decoration, for constructing exhibition stands, for exhibition requisites, for displays, for placards, for labels, for protective glazing of machines or of vehicles, in the lighting sector, in the fitting out of shops or of stores, as a promotional requisite or a laminating material, or in applications associated with food or drink.

18. The use of an opaque white film as claimed in any one of claims 1 to 13 for outdoor applications, such as roofing systems, external cladding, protective coverings, applications in the construction sector, or illuminated advertising profiles, or in the transport sector.

## Revendications

1. Film opaque blanc ayant une épaisseur dans la plage de 10 à 500 μm, qui contient en tant que composant principal une matière thermoplastique cristallisable, **caractérisé en ce que** le film contient au moins du sulfate de baryum en tant que pigment, au moins un stabilisant UV en tant que photoprotecteur et au moins un azurant optique, le film contenant le stabilisant UV en une proportion dans la plage de 0,01 à 5 % en poids, par rapport au poids de la matière thermoplastique et le stabilisant UV étant choisi dans le groupe comprenant les 2-hydroxybenzophénones, les 2-hydroxybenzotriazoles, les composés organiques contenant du nickel, les esters d'acide salicylique, les dérivés d'esters d'acide cinnamique, les monobenzoates de résorcinol, les oxalo-anilides, les esters d'acide hydroxybenzoïque, les triazines et des amines à encombrement stérique et des mélanges de ceux-ci.

2. Film opaque blanc selon la revendication 1, **caractérisé en ce que** la matière thermoplastique cristallisable est choisie dans le groupe constitué par le poly(éthylène-téréphtalate), le poly(butylène-téréphtalate) et le poly(éthylène-naphtalate).

3. Film opaque blanc selon la revendication 1 ou 2, **caractérisé en ce qu'**il contient du sulfate de baryum en tant que pigment, en une proportion dans la plage allant de 0,2 à 40 % en poids, par rapport au poids de la matière thermoplastique cristallisable, et **en ce que** le sulfate de baryum est ajouté à la matière thermoplastique par addition dosée, au moyen de la technique de mélange-maître, lors de la fabrication du film.

4. Film opaqueblanc selon l'une quelconque des revendications 1 à 3, **caractérisé en ce qu'**il contient l'azurant optique en proportions dans la plage de 10 à 50 000 ppm, par rapport au poids de la matière thermoplastique cristallisable, et **en ce que** l'azurant optique est ajouté à la matière thermoplastique par addition dosée, au moyen de la technique de mélange-maître, lors de la fabrication du film.

5. Film opaque blanc selon la revendication 4, **caractérisé en ce que** l'azurant optique est choisi dans le groupe comprenant des bis-benzoxazoles, des phénylcoumarines ou des bis-stérylbiphényles, en particulier de la triazine-phénylcoumarine.

6. Film opaque blanc selon l'une quelconque des revendications 1 à 5, **caractérisé en ce qu'**il contient un stabilisant UV en tant que photoprotecteur, en une proportion dans la plage allant de 0,01 à 5 % en poids, par rapport au poids de la matière thermoplastique, les 2-hydroxybenzotriazoles et les triazines étant préférées, et **en ce que** le stabilisant UV est ajouté à la matière thermoplastique par addition dosée, au moyen de la technique de mélange-maître, lors de la fabrication du film.

**7.** Film opaque blanc selon l'une quelconque des revendications 1 à 6, **caractérisé en ce qu'**il contient en outre un colorant bleu soluble dans le polyester, choisi dans le groupe comprenant le bleu de cobalt, le bleu outremer, des colorants anthraquinoniques et des mélanges de ceux-ci, en particulier du bleu Soudan 2, et **en ce que** la proportion du colorant bleu se situe dans la plage de 10 à 10 000 ppm, par rapport au poids de la matière thermoplastique cristallisable.

**8.** Film opaque blanc selon l'une quelconque des revendications 1 à 7, **caractérisé en ce qu'**il contient du sulfate de baryum sous forme de sulfate de baryum précipité, se présentant comme une poudre incolore finement divisée, ayant une taille moyenne de grain dans la plage de 0,1 à 5 μm, mesurée selon la méthode au sédigraphe.

**9.** Film opaque blanc selon l'une quelconque des revendications 1 à 8, **caractérisé en ce qu'**il présente un brillant superficiel, mesuré selon DIN 67530 (angle de mesure 20°), supérieur ou égal à 10, et une transmission de la lumière (transparence), mesurée selon ASTM-D 1003, inférieure ou égale à 30 %.

**10.** Film opaque blanc selon l'une quelconque des revendications 1 à 9, **caractérisé en ce qu'**il est monocouche ou multicouche, celui-ci comportant dans la forme d'exécution multicouche au moins une couche de base et au moins une couche de recouvrement, et une structure tricouche A-B-A ou A-B-C étant préférée.

**11.** Film opaque blanc selon la revendication 10, **caractérisé en ce que**, dans la forme d'exécution multicouche, le sulfate de baryum, le stabilisant UV, l'azurant optique et éventuellement le colorant bleu sont contenus dans la couche de recouvrement.

**12.** Film opaque blanc selon la revendication 10, **caractérisé en ce que** les couches de recouvrement sont elles aussi munies de sulfate de baryum, stabilisant UV, azurant optique et éventuellement colorant bleu.

**13.** Film opaque blanc selon l'une quelconque des revendications 1 à 12, **caractérisé en ce qu'**il est muni au moins sur une face d'un revêtement résistant à la rayure, d'un copolyester ou d'un promoteur d'adhérence.

**14.** Procédé pour la fabrication d'un film opaque blanc selon l'une quelconque des revendications 1 à 13, par le procédé d'extrusion, dans lequel la matière thermoplastique fondue dans une extrudeuse est compactée, extrudée à travers une filière plate et, sous forme de préfilm essentiellement amorphe, refroidie brusquement sur un cylindre refroidisseur, ensuite chauffée de nouveau et étirée dans le sens longitudinal et dans le sens transversal ou dans le sens transversal et dans le sens longitudinal ou bien dans le sens longitudinal, dans le sens transversal et encore une fois dans le sens longitudinal et/ou dans le sens transversal, **caractérisé en ce que** les températures d'étirage sont réglées dans une plage de $T_g$ + 10 K à $T_g$ + 60 K et **en ce que** le rapport d'étirage de l'étirage longitudinal est réglé dans la plage de 2 à 5, celui de l'étirage transversal est réglé dans la plage de 2 à 5 et celui du second étirage longitudinal éventuellement effectué est réglé dans la plage de 1,1 à 3.

**15.** Procédé selon la revendication 14, **caractérisé en ce que** le thermofixage du film s'effectue à des températures de four dans la plage de 200 à 260°C.

**16.** Procédé selon la revendication 14 ou 15, **caractérisé en ce que** les propriétés optiques (transparence) du film sont ajustées par variation de la température d'étirage longitudinal et/ou du rapport d'étirage longitudinal.

**17.** Utilisation d'un film selon l'une quelconque des revendications 1 à 13, pour des habillages d'intérieur, pour le montage d'expositions et pour des articles d'exposition, pour des afficheurs, pour des panneaux, pour des étiquettes, pour des vitrages protecteurs de machines et de véhicules, dans le secteur de l'éclairage, dans la construction de magasins et de rayonnages, comme article publicitaire, comme milieu de contre-collage et dans des applications alimentaires.

**18.** Utilisation d'un film opaque blanc selon l'une quelconque des revendications 1 à 13, pour des applications extérieures, telles que des toitures, des habillages extérieurs, des couvertures, des applications dans le secteur du bâtiment, des profilés de publicité lumineuse et dans le secteur de la signalisation.